# EUROPÄISCHE PATENTSCHRIFT

(11) **EP 0 869 722 B1**
(45) Veröffentlichungstag und Bekanntmachung des Hinweises auf die Patenterteilung: **10.12.2003**
(21) Anmeldenummer: 97942848.9
(22) Anmeldetag: 02.08.1997
(51) Int. Cl.: A23L 3/358, A01N 59/26, A61L 2/18

(54) **VERWENDUNG VON SAUREN NATRIUMPOLYPHOSPHATEN ZUR KEIMHEMMUNG VON SCHIMMEL UND HEFEN**
USE OF ACID SODIUM POLYPHOSPHATES FOR INHIBITING THE GERMINATION OF MOULDS AND YEASTS
UTILISATION DE POLYPHOSPHATES DE SODIUM ACIDES POUR INHIBER LA GERMINATION DE MOISISSURES ET DE LEVURES

(30) Priorität: 22.08.1996 DE 19633895
(43) Veröffentlichungstag der Anmeldung: 14.10.1998
(73) Patentinhaber: BK Giulini Chemie GmbH & Co. OHG, 67065 Ludwigshafen (DE)
(72) Erfinder: MAURER-ROTHMANN, Andrea, D-69469 Weinheim (DE); SCHEURER, Günther, D-67454 Hassloch (DE)
(86) Internationale Anmeldenummer: EP9704270
(87) Internationale Veröffentlichungsnummer: WO98007336

(56) Entgegenhaltungen:
- DE-A- 4 128 124
- DE-C- 4 305 105
- FR-A- 1 568 003
- US-A- 2 774 672
- US-A- 4 309 451
- US-A- 4 988 523
- C.I. LEBRON ET AL.: "Inhibition of mold growth and mycotoxin production in high-moisture corn treated with phosphates" JOURNAL OF FOOD PROTECTION, Bd. 52, Nr. 5, Mai 1989, Seiten 329-336, XP002049145
- DATABASE WPI Week 9043 Derwent Publications Ltd., London, GB; AN 90-326473 XP002049147 & SU 1 532 051 A (DONSKOL AGRIC. INST.) , 30.Dezember 1989
- S. KOTINEK MARSH ET AL.: "Effects of phosphate solutions on aflatoxin production in a synthetic medium and in frankfurters" JOURNAL OF FOOD PROTECTION , Bd. 59, Nr. 6, 1996, Seiten 626-630, XP002049146
- DATABASE WPI Week 7343 Derwent Publications Ltd., London, GB; AN 73-64753U XP002049148 & JP 48 052 932 A (T. FUKUDA) , 1973
- DATABASE WPI Week 7226 Derwent Publications Ltd., London, GB; AN 72-42176T XP002049149 & JP 47 022 253 B (E. KOYANAGI) , 1972

## Beschreibung

Die vorliegende Erfindung betrifft die neue Verwendung von sauren Natriumpolyphosphaten zur Keimhemmung von Schimmel und Hefen, wobei die Polyphosphate einen P₂O₅-Gehalt von 70 bis 77 Gew.-% und einen Na₂O-Gehalt von 20 bis 27 Gew.-% aufweisen.

Es ist bekannt, daß verschiedene kondensierte Phosphate wie glasiges Natriumpolyphosphat, früher als Natriumhexametaphosphat bezeichnet, Natriumtripolyphosphat, Natriumtetrapolyphosphat und Natriummetaphosphat in vitro eine hemmende Wirkung gegen verschiedene Bakterienarten besitzen, wobei diese Wirkung normalerweise bei Gram-positiven Bakterien ausgeprägter ist als bei Gram-negativen, da diese die Polyphosphate über Phosphorase besser abbauen können. Der Wirkungsmechanismus ist bisher nicht eindeutig geklärt, jedoch wird angenommen, daß die Polyphosphate durch Komplexbildung mit Metallionen wie Calcium und Magnesium verschiedene enzymatische Prozesse stören und die Zellwände schädigen (vgl. Phosphates in Food Processing, Chapter 15 in T. E. Furia, Handbook of Food Additives, 2nd Ed., CRC Press, Cleveland USA, 1972, S. 621 - 631 und 738 - 742).

Diese in der Nahrungsmittelindustrie zugelassenen Phosphate sind "neutrale" Phosphate, welche in wäßriger Lösung einen pH-Wert zwischen 6 und 8, P₂O₅-Gehalte von unter 70 % und Na₂O-Gehalte von über 30 % aufweisen. Während solche Phosphate in neutraler bis schwach alkalischer Lösung bei Normaltemperatur sehr beständig sind, werden sie bei höheren Temperaturen und in saurer Lösung zu den Orthophosphaten hydrolysiert.

Von E. J. Griffith wurden 1956 neue saure Natriumphosphate beschrieben, welche durch Zusammenschmelzen von Mononatriumdihydrogenphosphat mit Phosphorsäure hergestellt werden (vgl. US-P 2,774,672 und JACS 78, 1956, 3867 - 3870). Durch den Zusatz von Phosphorsäure werden in den glasartigen oder kristallinen Endprodukten P₂O₅-Gehalte von über 70 % erhalten. Die entsprechenden Produkte sind schwer wasserlöslich, stark sauer und in wässriger Lösung relativ beständig. Die sauren Polyphosphate sollen zusammen mit entsprechenden Carbonaten als Backtriebmittel Verwendung finden.

Aus der DE 43 05 105 - C1 ist ferner bekannt, daß solche sauren Phosphate auch zur bakteriostatischen Behandlung von Fleisch und Geflügel verwendet werden können.

Aus der DE 41 28 124 - C2 ist bekannt, daß solche Phosphate mit einem P₂O₅-Gehalt von 73 - 77 Gew.-% bei der Herstellung von Käse zugesetzt werden können und eine Fehlgärung durch Bildung anaerober Bakterien verhindern, ohne die Reifung des Käses zu hindern.

Ferner ist bekannt, daß Natriumorthophosphat, Natriumtripolyphosphate aber auch saure Natriumultrametaphosphate in fermentierter Milch (Joghurt) eine stabilisierende Wirkung auf die verwendeten Lactobacillus bulgaricus oder Streptococcus thermophilus Kulturen aufweisen und das Bakterienwachstum fördern (vgl. CA 92(23:196522p)). Eine Wirkung auf Schimmel- und Hefepilze ist bisher nicht beobachtet worden.

In dem Artikel von Lebron et al "Inhibition of mould growth and mycotoxin production in high moisture corn treated with phosphates" in Journal of Food Protection , Bd. 52, Nr. 5, Seiten 329-336, 1989 werden auch sauere Natriumpolyphosphate zur Keimhemmung von Schimmel in Getreidekörnern in einer Konzentration von 1 Gew. % beschrieben. Die Verwendung von solchen Phosphaten erlaubt es, die Lagerung von feuchten Getreidekörnern, die häufig mit Schimmelpilzen befallen sind, zu verbessern. Die Hemmung des Schimmelpilz Wachstums ergibt sich bei Konzentration von über 1 Gew. % des zugesetzten Phosphates. Die hier verwendeten saueren Polyphosphate sind mit den erfindungsgemäßen nicht identisch. Der Unterschied zwischen diesen beiden Verwendungen liegt ausserdem in der Konzentration und zwar tritt die keimhemmende Wirkung mit dem erfindungsgemäßen Mittel bei deutlich niedrigeren Konzentration ein.

In der FR-A 1 568 003 (Stauffer Chemical Company) wird ein Verfahren bekannt gegeben, das dadurch gekennzeichnet ist, dass eine Kolonie des betreffenden Pilzes eine ausreichende Menge eines Polyphosphates der allgemeinen Formel 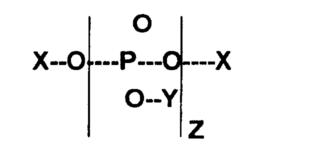 aufbringt, in welcher X Wasserstoff oder ein Alkalimetall, Y ein Alkalimetall und Z das Symbol für die mittlere Kettenlänge von wenigstens 2 max. 9 bedeutet. Die hier beschrieben Produkte entsprechen nicht den erfindungsgemäßen Verbindungen, in denen der P₂O₅ Gehalt 70 bis 77 % beträgt

Überraschenderweise wurde nunmehr gefunden, daß saure Natriumpolyphosphate mit P₂O₅-Gehalten von 70 - 77 Gew.-%, Na₂O-Gehalten von 20 - 27 Gew.-% und H₂O-gehalten von 2 - 3 Gew.-% auch gegen Schimmel- und Hefepilze wirken und als Mittel gegen Pilzbefall in Lebensmitteln und lebensmittelverarbeitenden Geräten eingesetzt werden kann.

Der Grund, warum diese sauren Polyphosphate, die z. B. bei Milchsäurebakterien wie andere Phosphate auch eine wachstumsfördernde Wirkung besitzen und nur bei Listeria-, Salmonella- und Chlostridia-Bakterien eine hemmende Wirkung haben, auch eine ausgeprägte hemmende Wirkung gegen Schimmel und Hefepilze besitzen, ist bisher nicht bekannt.

Die erfindungsgemäßen Mittel werden als trockene Pulver oder vorzugsweise als wäßrige Suspensionen mit Konzentrationen von bis zu 25 Gew.-%, insbesondere 1,0 bis 5 % Phosphat, eingesetzt.

Die Mittel sollten im zu konservierenden Lebensmittel in einer Menge von 0,1 - 1,0 Gew.-% enthalten sein.

Für die erfindungsgemäße Konservierung kommen Obst- und Gemüsepickles, Bier, Milchprodukte wie z. B. Puddingdesserts, Mousseprodukte, Produkte, die Joghurt enthalten und Getränke auf Molkebasis in Frage, die einen gewissen Flüssigkeitsanteil enthalten, in dem sich die schwerlöslichen sauren Phosphate langsam lösen und dabei in niederpolymere Phosphate übergehen, die in Lebensmitteln üblich sind (Orthophosphat, Pyrophosphat, Metaphosphat).

Es ist jedoch auch möglich, das Mittel als trockenes Pulver Produkten wie Getreide, Mehl, Nudelprodukten etc. zuzumischen, um bei der Verarbeitung und Lagerung eine Konservierung zu erreichen. Wie Versuche zeigen, läßt sich auf diese Art und Weise der Schimmel- und Hefebefall signifikant senken.

Es ist auch möglich, die erfindungsgemäßen Mittel als Reinigungs- oder Spülflüssigkeiten für Rohrleitungen und Behälter, in denen Lebensmittel verarbeitet werden, zu verwenden, wobei Konzentrationen von 1 - 50 Gew.-% sinnvoll sind.

Weiterhin kann es von Vorteil sein, die erfindungsgemäßen Mittel zusätzlich mit den bekannten neutralen Nahrungsmittelphosphaten oder anderen bekannten Bakteriostatika wie Sorbaten oder Nitraten zu mischen und gemeinsam einzusetzen.

Insbesondere bevorzugt wird eine Abpufferung der Mischung mit Trinatriumorthophosphat auf pH-Werte von 5,5 - 6,5, durch die eine übermäßige Ansäuerung der zu behandelnden Lebensmittel vermieden wird.

Die Erfindung wird in den folgenden Beispielen näher beschrieben, ohne daß sie darauf beschränkt sein soll.

### Beispiel 1

### Saures Natriumpolyphosphat

100 kg Mononatriumphosphat (Anhydrid) und 36 I 83gew.-%ige Phosphorsäure (= 60 kg) (Na/P = 0,62) werden homogenisiert und in einen auf 600°C vorgewärmten diskontinuierlichen Kammerofen eingefüllt. Man erhitzt das Gemisch etwa 60 Minuten auf eine Schmelztemperatur von 400°C (Badtemperatur). Die Schmelzoberfläche zeigt noch deutlich Blasenbildung von austretendem Kondenswasser. Im Anschluß läßt man die klare Schmelze auf eine kalte Gußkokille ab. Das Material wird beim Abkühlen blasenfrei und völlig glasklar transparent. Das Material wird anschließend aus der Gußkokille ausgetragen, gebrochen, gemahlen und in luftdichten Behältern aufbewahrt.

| | |
|---|---|
| pH-Wert | 1,7 (5gew.-%ige Lösung) |
| P₂O₅-Gehalt | 77,0 Gew.-% |
| Na₂O-Gehalt | 20,55 |
| H₂O-Gehalt | 2,45 |

### Beispiel 2

### Natriumpolyphosphat

50gew.-%ige Natronlauge und 83gew.-%ige Phosphorsäure werden im Verhältnis Na/P = 0,73 kontinuierlich über zwei Dosierpumpen und getrennte Leitungen in einen Reaktionsbehälter geleitet. Es entsteht eine heiße Suspension von teilneutralisierter Orthophosphorsäure, die im Anschluß in einen direktbeheizten Kammerofen geleitet wird. Die Beheizung des Kammerofens wird über die Ablufttemperatur geregelt und auf 500°C gehalten. Die Suspension durchläuft unter Kondensation den Kammerofen mit einer mittleren Verweilzeit von etwa 2 Stunden. Das durchreagierte Schmelzphosphat wird am Ende des Ofens kontinuierlich über eine Überlaufrinne in eine wassergekühlte Kühltrommel abgeführt. Dort erstarrt das Material zu einem Glas, wird im Anschluß gebrochen und gemahlen. Die Abfüllung erfolgt in luftdichte Gebinde, auf trockene Lagerung ist zu achten.

| | |
|---|---|
| pH-Wert | 1,9 |
| P₂O₅-Gehalt | 73,0 Gew.-% |
| Na₂O-Gehalt | 24,2 |
| H₂O-Gehalt | 2,8 |
| Löslichkeit | 90 Minuten (5gew.-%ige Lösung gerührt) klarlöslich |
| Glühverlust | 2,0 Gew.-% |

### Eingesetzte Rohstoffe

### 1. Thermische Phosphorsäure (83 gew.-%ig)

Herstellung durch Verbrennung von elementarem Phosphor und Adsorption des entstehenden Phosphorpentoxids in Phosphorsäure unter fortlaufendem Verdünnen auf eine definierte Dichte durch Zugabe von entionisiertem Wasser.

### Produktdaten

| | |
|---|---|
| Dichte (25°C) | 1,664 g/ml |
| P₂O₅ | 60,1 Gew.-% |
| As | < 0,5 ppm typisch: 0,1 ppm |
| F | < 10 ppm |
| Schwermetalle | < 20 ppm |
| Kupfer | < 10 ppm |
| Zink | < 3 ppm |
| H₃PO₃ | < 0,1 Gew.-% |
| Blei | < 1 ppm |

2. Natronlauge (50gew.-%ig)

| | |
|---|---|
| Dichte | 1,52 g/l |
| Gehalt | 50,0 Gew.-% |
| Hg | < 1 ppm |
| Al | < 10 ppm |
| Eisen | < 3 ppm |
| Chlorid | < 10 ppm |
| Kalium | < 50 ppm |
| Arsen | < 0,3 ppm |

Der Gehalt der Natronlauge wird pro Lieferung durch Dichtebestimmung und Titration überprüft. Die übrigen Parameter werden stichprobenartig über die Spurenelementanalytik der Atomabsorption bestimmt.

Ein Kammerofen zur Herstellung des Produktes gemäß Beispiel 2 umfaßt den eigentlichen Kammerofen aus feuerfestem, säurefestem Material mit Öffnungen für einen Gasbrenner, eine Ableitung des geschmolzenen Polyphosphats und die Abgase sowie eine Zuleitung für Natriumpolyphosphat und Phosphorsäure bzw. P₂O₅, ferner eine wassergekühlte Kühltrommel und Mahlwerke, in denen die Grob- und Feinzerkleinerung des Produktes stattfindet.

### Beispiel 3

### Zusammensetzung der konservierenden Lösung

Natriumpolyphosphat mit einem P₂O₅-Gehalt von 73 Gew.-% gemäß Beispiel 2 wird in Konzentrationen von 1, 2, 5, 10 und 50 % in Wasser gelöst bzw. suspendiert und mit Trinatriumphosphat auf einen pH-Wert von ca. 6,5 oder 5,5 eingestellt.

### Beispiel 4

### Zusammensetzung der konservierenden Pulver

1 kg Natriumpolyphosphatpulver mit einem P₂O₅-Gehalt von 77 Gew.-% gemäß Beispiel 1 wird mit 0,6 kg Trinatriumorthophosphatpulver trocken gemischt und in einer Strahlmühle auf eine Feinheit von ≤ 50 µm, vorzugsweise ≤ 30 µm, vermahlen.

In dieser Form ist es als Konservierungszusatz für feste Produkte geeignet.

### Beispiel 5

### Wirkung einer Kombination von sauren Polyphosphaten auf das Wachstum von Hefen

### Teststamm: Saccharomyces cerevisiae (DSM 1333)

Die Keime wurden aus einer Sporensuspension (in sterilem Leitungswasser) auf Agarnährmedium (fester Nährboden) eingeimpft. Die Einsaat erfolgte so, daß ein Titer von 10⁵ Sporen/g bzw. ml eingestellt wurde. Die Keimzahl betrug nach der Wärmebehandlung 10³ pro g bzw. ml zum Zeitpunkt t₀. Die Keimzahlbestimmung wurde auf YGC-Agar (Merck 116000) im Plattengußverfahren durchgeführt.

In den Konzentrationsreihen zwischen 0,01 % und 1 % ergab sich für den oben genannten Keim folgendes Ergebnis:

Die Konzentration von 0,05 % der genannten sauren Polyphosphate führt bereits zur deutlichen Wachstumsverzögerung von Saccharomyces cerevisia; ab einer Konzentration von 0,3 % tritt eine vollständige Hemmung des Wachstums ein.

### Beispiel 6

### Wirkung einer Kombination von sauren Polyphosphaten gegen Schimmel

### Teststamm: Aspergillus niger

Die Keime wurden aus einer Sporensuspension (in sterilem Leitungswasser) auf Agarnährmedium (fester Nährboden) eingeimpft. Die Einsaat erfolgte so, daß ein Titer 10⁵ Sporen/g bzw. ml eingestellt wurde. Die Keimzahl betrug nach der Wärmebehandlung 10³ pro g bzw. ml zum Zeitpunkt t₀. Die Keimzahlbestimmung wurde auf YGC-Agar (Merck 116000) im Plattengußverfahren durchgeführt.

In Konzentrationen von 0,1 % bis 0,3 % war eine deutliche Hemmung des Wachstums festzustellen; zwischen 0,5 % und 1 % war kein Wachstum mehr festzustellen.

### Beispiel 7

Entsprechend wurden weitere Hefen und Schimmelpilze der unten genannten Spezies bei einer Konzentration von 0,5 % getestet und auch hier war festzustellen, daß das Wachstum vollständig gehindert war:
Hefen
   Debaryomyoces hansenii
   Pichia anomala
   Dekkera bruxellensis
   Kluyveromyces polysporus
   Torulaspora delbrueckii
   Candida albicans
Schimmel
   Fusarium tabacinum
   Fusarium monoliforme
   Fusarium culmorum
   Aspergilus flavus
   Eurotium
   Mucor sp.

### Beispiel 8

Starke Wachstumshemmung ergab sich bei einer Konzentration von 0,1 % und 0,3 % sauren Polyphosphaten für folgende Schimmelarten
Penicilium candidum
Penicilium roquefortii

Aufgrund der genannten Ergebnisse, die für die Testkeime in Agarnährkultur erzielt wurden, ist davon auszugehen, daß eine hemmende Wirkung auf o.g. Keime auch in Lebensmitteln zu erzielen ist

Der Einsatz der beschriebenen sauren Polyphosphate ist daher besonders in solchen Lebensmitteln von Vorteil, die aufgrund ihres pH-Wertes insbesondere für Hefen und Schimmel ein bevorzugtes Medium darstellen und damit dem raschen Verderb ausgesetzt sind: z.B. Fruchtsäfte (Organgensaft), Diätmarmeladen, Quark und Quarkzubereitungen, Frischkäse und Frischkäsezubereitungen, Käse und Käsezubereitungen, Schmelzkäse und Schmelzkäsezubereitungen, Produkte auf Joghurtbasis.
Ferner ist die Anwendung der beschriebenen sauren Polyphosphate z.B. für Getreide oder bei der Bierherstellung von Vorteil.

## Patentansprüche

1. Verwendung von sauren Natriumpolyphosphaten zur Keimhemmung von Schimmel und Hefe in Lebensmitteln, **dadurch gekennzeichnet, daß** das Polyphosphat einen P₂O₅ Gehalt von 70 bis 77 Gew. % , **bevorzugt 71 bis 75 Gew. % ,** einen Na₂O Gehalt von 20 bis 27 Gew. %, **bevorzugt 22 bis 26 Gew. %,** einen Wassergehalt von 2 bis 3 Gew. % und einen mittleren linearen Kondensationsgrad von 8 bis 20 besitzt, indem man das Phosphat in einer Konzentration von 0,1 bis 1 Gew. % zufügt.

2. Verwendung gemäß Anspruch 1, **dadurch gekennzeichnet, daß** die sauren Natriumpolyphosphate in Mischung mit neutralen Natriummetaphosphaten, Citraten, Sorbaten und/oder Trinatriumphosphat eingesetzt werden.

3. Verwendung nach einem der Ansprüche 1 bis 2, **dadurch gekennzeichnet, daß** das Phosphat vorzugsweise mit Trinatriumorthophosphat auf einen pH-Wert von 5,5― 6,5 gepuffert ist.

4. Verwendung nach einem der Ansprüche 1 bis 4, **dadurch gekennzeichnet, daß** das Phosphat in einer Konzentration von 0,1 bis 1 Gew. %, vorzugsweise 0,5 Gew,. % in den Lebensmitteln enthalten ist.

## Claims

1. Use of acidic sodium polyphosphates for microbe inhibition of moulds and yeasts in foods, **characterised in that** the polyphosphate has a P₂O₅ content of between 70 % and 77 % by weight, preferably between 71 % and 75 %, an Na₂O content of between 20 % and 27 % by weight, preferably between 22 % and 26 % by weight, a water content of between 2 % and 3 % by weight and an average linear condensation level of between 8 and 20 **in that** the phosphate is added in a concentration of between 0.1 % and 1 % by weight.

2. Use according to Claim 1, **characterised in that** the acidic sodium polyphosphates are used in a mixture with neutral sodium metaphosphates, citrates, sorbates and/or trisodium phosphate.

3. Use according to one of the claims 1 or 2, **characterised in that** the phosphate is preferably buffered with trisodium orthophosphate to a pH value of between 5.5 and 6.5.

4. Use according to one of the claims 1 to 4, **characterised in that** the phosphate is contained in the food in a concentration of between 0.1 % and 1 % by weight, preferably 0.5 % by weight.

## Revendications

1. Utilisation de polyphosphates acides de sodium pour la destruction des germes de moisissures et de levures dans les produits alimentaires, **caractérisée en ce que** le polyphosphate présente une teneur en P₂O₅ comprise entre 70 et 77 % en poids, **préférentiellement entre 71 et 75 % en poids,** une teneur en Na₂O comprise entre 20 et 27 % en poids, **préférentiellement entre 22 et 26 en poids,** une teneur en eau comprise entre 2 et 3 % en poids et un degré moyen de condensation linéaire compris entre 8 et 20, en additionnant le phosphate à une concentration comprise entre 0,1 et 1 % en poids.

2. Utilisation selon revendication 1, **caractérisée en ce que** les polyphosphates acides de sodium sont utilisés en mélange avec des métaphosphates de sodium neutres, des citrates, des sorbats et/ou du triphosphate de sodium.

3. Utilisation selon l'une des revendications 1 et 2, **caractérisée en ce que** le phosphate est préférentiellement tamponné avec de l'orthophosphate trisodique à une valeur pH comprise entre 5,5 et 6,5.

4. Utilisation selon l'une des revendications 1 à 4, **caractérisée en ce que** le phosphate est contenu dans les produits alimentaires à une concentration comprise entre 0,1 et 1 % du poids, préférentiellement 0,5 % du poids.
